# EUROPÄISCHE PATENTANMELDUNG

(11) **EP 1 738 976 A1**
(43) Veröffentlichungstag der Anmeldung: **03.01.2007**
(21) Anmeldenummer: 06116113.9
(22) Anmeldetag: 27.06.2006
(51) Int. Cl.: B60R 22/34

(54) **Energieabsorbierende Gurtaufroller**

(30) Priorität: 01.07.2005 DE 102005032012
(71) Anmelder: TAKATA-PETRI (Ulm) GmbH, 89081 Ulm (DE)
(72) Erfinder: Glinka, Oliver, 89081, Ulm (DE)
(74) Vertreter: Baumgärtel, Gunnar

(57) **Zusammenfassung**

Die Erfindung bezieht sich auf einen Gurtaufroller (10) mit einer Gurtspindel (20) zum Auf- und Abwickeln eines Sicherheitsgurtes (30) und mit einer mit der Gurtspindel in Verbindung stehenden Gurtkraftbegrenzungseinrichtung (40), die im Unfallfalle eine vom Sicherheitsgurt ausgeübte Gurtrückhaltekraft (Ft) begrenzt.

Der Erfindung liegt die Aufgabe zugrunde, einen Gurtaufroller anzugeben, der sich noch universeller als bisherige Gurtaufroller einsetzen lässt.

Diese Aufgabe wird erfindungsgemäß dadurch gelöst, dass eine Gurtkrafterhöhungseinrichtung (100) vorhanden ist, die derart ausgestaltet ist, dass sie bei Erreichen einer vorgegebenen Gurtbandauszugslänge (Sg) das weitere Ausziehen des Sicherheitsgurtes (30) blockiert und sich bei Überschreiten einer vorgegebenen maximalen Gurtrückhaltekraft (Fmax) selbsttätig und vollständig deaktiviert.

## Beschreibung

Die Erfindung bezieht sich auf einen Gurtaufroller mit den Merkmalen gemäß dem Oberbegriff des Patentanspruchs 1.

Ein derartiger Gurtaufroller ist aus der internationalen Patentanmeldung WO 97/04996 bekannt. Dieser Gurtaufroller weist einen Torsionsstab als Gurtkraftbegrenzungseinrichtung auf. Zusätzlich ist bei dem vorbekannten Gurtaufroller eine Gurtauszugsbegrenzungseinrichtung in Form eines Fangbandes vorhanden, das im Falle eines Unfalls den Gurtbandauszug begrenzt und ein Tordieren des Torsionsstabes über ein vorgegebenes Maß hinaus begrenzt. Konkret wird der Gurtbandauszug blockiert, sobald das Fangband vollständig auf einer Sperrbasis des Gurtaufrollers aufgewickelt ist.

Aus der europäischen Patentschrift EP 1 149 743 B1 ist ein Gurtaufroller bekannt, der zwei Gurtkraftbegrenzungseinrichtungen aufweist. Die eine Gurtkraftbegrenzungseinrichtung wird durch einen Torsionsstab gebildet, der im Unfallfall tordiert und somit die Gurtrückhaltekraft begrenzt. Eine weitere Gurtkraftbegrenzungseinrichtung wird durch einen Draht gebildet, der in einer Spindel des Gurtaufrollers untergebracht ist. Im Unfallfall, wenn sich die Gurtspindel relativ zu einer Sperrbasis des Gurtaufrollers dreht, wird der Draht aus der Gurtspindel herausgezogen. Hierbei sind eine Reibungs- und eine Deformationskraft zu überwinden, die die Gurtrückhaltekraft des Gurtaufrollers erhöhen. Die Gurtrückhaltekraft wird somit durch die Torsionskraft des Torsionsstabes und die Reibungs- und Deformationskraft des Drahtes bestimmt. Mit dem Draht steht eine Schneidvorrichtung in Verbindung, die den Draht durchschneiden kann und somit die weitere Gurtkraftbegrenzungseinrichtung abschalten kann. In diesem Falle wird die resultierende Gurtrückhaltekraft allein durch den Torsionsstab bestimmt. Mit den beiden Gurtkraftbegrenzungseinrichtungen lassen sich insgesamt zwei unterschiedliche Gurtrückhaltekräfte einstellen, nämlich eine große Rückhaltekraft, die durch den Torsionsstab und den Draht hervorgerufen wird, und eine kleine Rückhaltekraft, die allein durch den Torsionsstab bestimmt wird, nachdem der Draht abgeschnitten oder vollständig aus der Gurtspindel herausgezogen worden ist.

Der Erfindung liegt die Aufgabe zugrunde, einen Gurtaufroller anzugeben, der sich noch universeller als bisherige Gurtaufroller einsetzen lässt.

Diese Aufgabe wird ausgehend von einem Gurtaufroller der eingangs angegebenen Art erfindungsgemäß durch die kennzeichnenden Merkmale des Anspruchs 1 gelöst. Vorteilhafte Ausgestaltungen des erfindungsgemäßen Gurtaufrollers sind in Unteransprüchen angegeben.

Danach ist erfindungsgemäß vorgesehen, dass eine Gurtkrafterhöhungseinrichtung vorhanden ist, die bei Erreichen einer vorgegebenen Gurtbandauszugslänge das weitere Ausziehen des Sicherheitsgurtes blockiert; bei Erreichen der vorgegebenen Gurtbandauszugslänge erhöht die Gurtkrafterhöhungseinrichtung somit die Gurtrückhaltekraft abrupt. Ein Überschreiten einer vorgegebenen maximalen Gurtrückhaltekraft wird erfindungsgemäß verhindert, weil die Gurtkrafterhöhungseinrichtung bei Erreichen einer vorgegebenen maximalen Gurtrückhaltekraft selbsttätig und vollständig deaktiviert wird.

Ein wesentlicher Vorteil des erfindungsgemäßen Gurtaufrollers ist darin zu sehen, dass dieser auch auf Rücksitzen eingesetzt werden kann. In vielen Ländern, beispielsweise in den USA, ist ein sogenannter "loop-load"-Test (Gurtschlaufen-Last-Test, vgl. z. B. US-Norm FMVSS209) vorgeschrieben, wonach bei einer in der Norm vorgegebenen Gurtauszugskraft nur eine vorgegebene Gurtbandauszugslänge auf den Rücksitzen möglich sein soll. Diese vorgegebene Gurtauszugskraft ist jedoch größer als das bei Gurtkraftbegrenzungseinrichtungen, wie beispielsweise Torsionsstäben, übliche Gurtkraftniveau, so dass ein Gurtaufroller mit einem Torsionsstab allein den "loop-load"-Test nicht bestehen kann. An dieser Stelle setzt die Erfindung an, indem erfindungsgemäß die Gurtkrafterhöhungseinrichtung vorgesehen wird, die bei Erreichen der vorgegebenen Gurtbandauszugslänge das weitere Ausziehen des Sicherheitsgurtes zunächst verhindert; der "loop-load"-Test wird somit bestanden. Im Unterschied zu dem eingangs erwähnten Gurtaufroller mit Gurtauszugsbegrenzungseinrichtung gemäß der internationalen Patentanmeldung WO 97/04996 bietet der erfindungsgemäße Gurtaufroller jedoch darüber hinaus einen sehr großen Schutz vor Verletzungen durch den Sicherheitsgurt, weil nämlich die Gurtkrafterhöhungseinrichtung bei Überschreiten der vorgegebenen maximalen Gurtrückhaltekraft wieder selbsttätig und vollständig deaktiviert wird; unnötige Verletzungen werden so vermieden.

Vorzugsweise lässt die Gurtkrafterhöhungseinrichtung vor Erreichen der vorgegebenen Gurtbandauszugslänge den Gurtbandauszug unbeeinflusst, zumindest annähernd unbeeinflusst, so dass das vorgegebene Gurtkraft-Begrenzungsverhalten vor Erreichen der vorgegebenen Gurtbandauszugslänge allein oder vorwiegend durch die Gurtkraftbegrenzungseinrichtung bestimmt wird.

Besonders kostengünstig und damit vorteilhaft ist der Aufbau des Gurtaufrollers, wenn die Gurtkrafterhöhungseinrichtung derart ausgestaltet ist, dass sie bei Überschreiten der vorgegebenen maximalen Gurtrückhaltekraft reißt oder bricht. Vorzugsweise weist die Gurtkrafterhöhungseinrichtung eine entsprechende Sollbruchstelle auf.

Gemäß einer besonders bevorzugten Ausgestaltung des Gurtaufrollers ist vorgesehen, dass die Gurtkraftbegrenzungseinrichtung durch einen Torsionsstab gebildet ist, der mit seinem einen Stabende mit der Gurtspindel und mit seinem anderen Stabende mit einer Sperrbasis in Verbindung steht, die sich im unfallfreien Falle mit der Gurtspindel mitdreht und im Falle eines Unfalls - insbesondere mittels eines Sperrelements wie beispielsweise einer Sperrklinke - blockiert wird.

Bevorzugt ist die Gurtkrafterhöhungseinrichtung durch ein aufwickelbares Element, insbesondere ein Band oder ein Seil, gebildet. Beispielsweise ist das aufwickelbare Element mit seinem einen Ende mit der Gurtspindel und mit seinem anderen Ende mit der Sperrbasis verbunden.

Gemäß einer besonders bevorzugten Variante des Gurtaufrollers ist vorgesehen, dass das aufwickelbare Element derart angeordnet ist, dass es im Falle eines Gurtbandauszugs bei gesperrter Sperrbasis auf einer Aufwickelvorrichtung aufgewickelt wird. Die Aufwickelvorrichtung kann beispielsweise durch einen in der Gurtspindel angeordneten Aufnahmekanal, durch einen Aufnahmebereich an der Sperrbasis oder durch den Torsionsstab selbst gebildet sein.

Vorzugsweise ist die Länge des aufwickelbaren Elements derart bemessen, dass dieses nach Erreichen der vorgegebenen Gurtbandauszugslänge vollständig auf der Aufwickelvorrichtung aufgewickelt ist und die Gurtrückhaltekraft erhöht.

Im Hinblick auf eine besonders platzsparende Lagerung des aufwickelbaren Elements wird es als vorteilhaft angesehen, wenn das aufwickelbare Element im Grundzustand des Gurtaufrollers, also vor Unfalleintritt, zumindest teilweise aufgewickelt ist.

Als besonders vorteilhaft wird es dabei angesehen, wenn das aufwickelbare Element im Grundzustand des Gurtaufrollers derart aufgewickelt ist, dass es im Falle eines Gurtbandauszugs bei gesperrter Sperrbasis zunächst abgewickelt wird und erst nach einem vollständigen Abwickeln wieder aufgewickelt wird, und zwar mit entgegengesetzter Wickelrichtung. Mit anderen Worten ist das aufwickelbare Element also im "Auslieferzustand" bzw. Grundzustand des Gurtaufrollers entgegen der Gurtabrollrichtung des Gurtaufrollers auf der Aufwickelvorrichtung aufgewickelt. Diese Wickelrichtung führt dazu, dass es zu einer Aktivierung der Gurtkrafterhöhungseinrichtung erst dann kommt, nachdem das aufwickelbare Element zweimal umgewickelt wurde, nämlich einmal abgewickelt und anschließend wieder aufgewickelt. Dadurch lässt sich ein spätes Auslösen (also ein langer Gurtbandauszug) mit einem relativ kurzen aufwickelbaren Element verwirklichen; es ist also eine sehr kurze Länge des aufwickelbaren Elements ausreichend.

Um das Deaktivieren der Gurtkrafterhöhungseinrichtung besonders einfach auszulösen, weist das aufwickelbare Element vorzugsweise zumindest eine Sollbruchstelle auf, die bei Überschreiten der vorgegebenen maximalen Gurtrückhaltekraft aufbricht.

Wenn der Gurtaufroller den bereits oben genannte "loop-load"-Test nach US-Norm FMVSS209 bestehen soll, ist die maximale Gurtrückhaltekraft der Gurtkrafterhöhungseinrichtung vorzugsweise größer als 6672 N (150 pound). Die vorgegebene Gurtbandauszugslänge ist dann vorzugsweise kleiner als 508 mm (20").

Die Erfindung wird nachfolgend beispielhaft anhand eines Ausführungsbeispiels erläutert. Dabei zeigen
- Figur 1: ein Ausführungsbeispiel eines erfindungsgemäßen Gurtaufrollers mit einem Torsionsstab als Gurtkraftbegrenzungseinrichtung und einem Seil als Gurtkrafterhöhungseinrichtung und
- Figur 2: ein Diagramm, dass die Gurtrückhaltekraft über der Gurtbandauszugslänge darstellt.

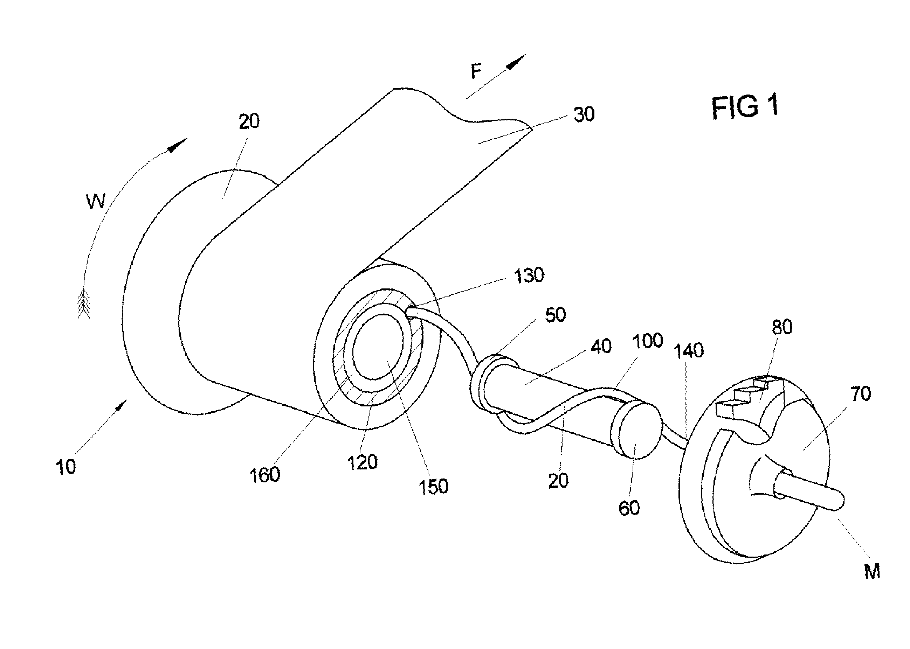

In der Figur 1 erkennt man einen Gurtaufroller 10 mit einer Gurtspindel 20, auf der ein Sicherheitsgurt 30 auf- und abgewickelt werden kann. Mit der Gurtspindel 20 steht eine Gurtkraftbegrenzungseinrichtung in Form eines Torsionsstabes 40 in Verbindung. Konkret ist ein Stabende 50 des Torsionsstabes 40 mit der Gurtspindel 20 drehfest verbunden.

Ein anderes Stabende 60 des Torsionsstabes 40 steht drehfest mit einer Sperrbasis 70 in Verbindung, die sich im unfallfreien Falle mit der Gurtspindel 20 mitdreht und im Falle eines Unfalls blockiert wird. Hierzu ist die Sperrbasis 70 mit einer Sperrklinke 80 versehen, die im Falle eines zu ruckartigen Gurtbandauszugs oder im Falle einer Auslösung durch einen Sensor (z. B. Gurtbandbeschleunigungssensor, Fahrzeugbeschleunigungssensor, Fahrzeugneigungssensor) ausschwenkt und die Sperrbasis 70 mit einem in der Figur 1 nicht weiter gezeigten Aufrollerrahmen und damit mit der Fahrzeugstruktur drehfest verbindet, so dass die Sperrbasis 70 arretiert wird und sich nicht mehr weiter drehen kann.

Wie sich in der Figur 1 außerdem erkennen lässt ist, ein Seil 100 in einem ringförmigen Aufnahmekanal 120 aufgerollt, und zwar entgegen der Gurtabrollrichtung ω des Gurtaufrollers 10. Der Aufnahmekanal 120 bildet eine Aufwickelvorrichtung für das Seil 100.

Das eine Seilende 130 des Seils 100 ist in dem ringförmigen, zur Drehachse M der Gurtspindel 20 rotationssymmetrischen Aufnahmekanal 120 befestigt. Das andere Seilende 140 des Seils 100 ist an der Sperrbasis 70 angebracht.

Der Aufnahmekanal 120 ist konzentrisch zu einem zylinderförmigen Hohlraum 150, in dem der Torsionsstab 40 liegt, angeordnet. Der Aufnahmekanal 120 und der zylinderförmige Hohlraum 150 sind lediglich durch einen schmalen ringförmigen Trennbereich 160 voneinander getrennt. Durch diesen Trennbereich 160 wird auch der Torsionsstab 40 von dem Seil 100 getrennt, so dass der Torsionsstab 40 das Auf- und Abwickeln des Seils 100 nicht stören kann.

### Der Gurtaufroller 10 gemäß der Figur 1 funktioniert wie folgt:

Im Falle eines Fahrzeugunfalls wird es zu einer ruckartigen Vorwärtsbewegung eines durch den Sicherheitsgurt 30 geschützten Fahrzeuginsassen kommen, so dass damit einhergehend auch der Sicherheitsgurt 30 zunächst ruckartig von der Gurtspindel 20 abgerollt wird. In diesem Fall wird die Sperrklinke 80 ausschwenken - beispielsweise weil sie durch einen der o. g. Sensoren ausgelöst wird - und die Sperrbasis 70 mit dem Aufrollerrahmen verriegeln. Das andere Stabende 60 des Torsionsstabes 40 ist nun blockiert, so dass sich dieses nicht mehr mit der Gurtspindel 20 mitdrehen kann. Aufgrund der durch die Vorverlagerung des Fahrzeuginsassen auftretenden Gurtauszugskraft F wird sich das Stabende 50 des Torsionsstabes 40 jedoch weiterdrehen, so dass der Torsionsstab 40 tordiert wird. Der Sicherheitsgurt 30 wird somit weiter abgerollt, wobei eine durch den mechanischen Torsionswiderstand bestimmte Gurtrückhaltekraft Ft auf den Fahrzeuginsassen ausgeübt wird.

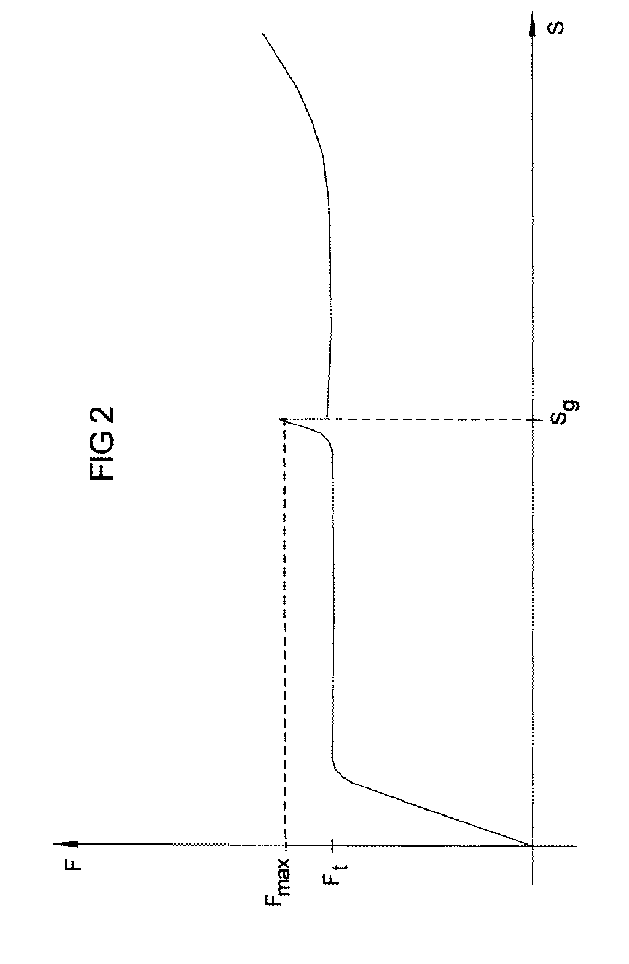

Die Gurtrückhaltekraft F ist in der Figur 2 dargestellt (vgl. Bereich für S < Sg). Man sieht, dass die Gurtrückhaltekraft F einen Wert von ca. Ft aufweist, der im Wesentlichen allein von dem Torsionsstab 40 geliefert wird.

Während des Tordierens des Torsionsstabes 40 wird das Seil 100 innerhalb des Aufnahmekanals 120 zunächst abgewickelt. Nach dem Abwickeln wird das Seil 100 innerhalb des Aufnahmekanals 120 wieder aufgewickelt, und zwar mit einer ― verglichen zur ursprünglichen Abwickelrichtung - entgegengesetzten Aufwickelrichtung.

Sobald das Seil 100 vollständig innerhalb des Aufnahmekanals 120 aufgewickelt ist, blockiert das Seil 100 den weiteren Gurtbandauszug. Dies ist in der Figur 2 dargestellt: Man erkennt, dass bei einer vorgegebenen Gurtbandauszugslänge Sg die Gurtrückhaltekraft F abrupt ansteigt.

Um nun zu verhindern, dass es zu Verletzungen des Fahrzeuginsassen kommt, ist das Seil 100 mit zumindest einer Sollbruchstelle 200 versehen, die die vom Seil 100 ausgeübte Gurtrückhaltekraft F auf einen vorgegebenen Maximalwert Fmax begrenzt. Überschreitet die Gurtrückhaltekraft F diesen vorgegebenen Maximalwert Fmax, so reist das Seil 100 und die Gurtrückhaltekraft F fällt auf das vom Torsionsstab 40 gelieferte Kraftniveau Ft zurück.

Die Funktion des Seils 100 besteht somit darin, bei Erreichen einer vorgegebenen Gurtbandauszugslänge Sg die Gurtrückhaltekraft F gezielt peakartig bzw. punktuell und schlagartig zu erhöhen und bei Überschreiten der vorgegebenen maximalen Gurtrückhaltekraft Fmax den Sicherheitsgurt 30 wieder freizugeben.

Wie sich in der Figur 2 erkennen lässt, ist die vorgegebene maximale Gurtrückhaltekraft Fmax größer als die Gurtrückhaltekraft Ft, die die erste Gurtkraftbegrenzungseinrichtung in Form des Torsionstabes 40 ausübt.

Bei dem Ausführungsbeispiel gemäß den Figuren 1 und 2 wird das Seil 100 im Aufnahmekanal 120 ab- und aufgewickelt. Alternativ kann das Seil 100 auch auf der Sperrbasis 70 oder unmittelbar auf dem Torsionsstab 40 ab- und aufgewickelt werden.

Bezugszeichen
- 10: Gurtaufroller
- 20: Gurtspindel
- 30: Sicherheitsgurt
- 40: Torsionsstab
- 50: Stabende
- 60: Stabende
- 70: Sperrbasis
- 80: Sperrklinke
- 100: Seil
- 120: ringförmiger Aufnahmekanal
- 130: Seilende
- 140: Seilende
- 150: zylinderförmiger Hohlraum
- 160: schmaler ringförmiger Trennbereich
- 200: Sollbruchstelle
- Fmax: vorgegebener Maximalwert
- Ft: Kraftniveau des Torsionsstabes
- ω: Gurtabrollrichtung des Gurtaufrollers
- M: Drehachse
- S: Gurtbandauszugslänge
- Sg: vorgegebene Gurtbandauszugslänge
- S_{Seil}: Länge des Seils

## Patentansprüche

1. Gurtaufroller (10)
- mit einer Gurtspindel (20) zum Auf- und Abwickeln eines Sicherheitsgurtes (30) und
- mit einer mit der Gurtspindel in Verbindung stehenden Gurtkraftbegrenzungseinrichtung (40), die im Unfallfalle eine vom Sicherheitsgurt ausgeübte Gurtrückhaltekraft (Ft) begrenzt,
**dadurch gekennzeichnet,**
**dass** eine Gurtkrafterhöhungseinrichtung (100) vorhanden ist, die derart ausgestaltet ist, dass sie
- bei Erreichen einer vorgegebenen Gurtbandauszugslänge (Sg) das weitere Ausziehen des Sicherheitsgurtes (30) blockiert und
- sich bei Überschreiten einer vorgegebenen maximalen Gurtrückhaltekraft (Fmax) selbsttätig und vollständig deaktiviert.

2. Gurtaufroller nach Anspruch 1, **dadurch gekennzeichnet, dass** die Gurtkrafterhöhungseinrichtung derart ausgestaltet ist, dass sie bei Überschreiten der vorgegebenen maximalen Gurtrückhaltekraft reißt oder bricht.

3. Gurtaufroller nach einem der voranstehenden Ansprüche, **dadurch gekennzeichnet, dass** die Gurtkraftbegrenzungseinrichtung durch einen Torsionsstab (40) gebildet ist, der mit seinem einen Stabende (50) mit der Gurtspindel und mit seinem anderen Stabende (60) mit einer Sperrbasis (80) in Verbindung steht, die sich im unfallfreien Falle mit der Gurtspindel mitdreht und im Falle eines Unfalls blockiert wird.

4. Gurtaufroller nach einem der voranstehenden Ansprüche, **dadurch gekennzeichnet, dass** die Gurtkrafterhöhungseinrichtung durch ein aufwickelbares Element, insbesondere ein Band oder ein Seil (100), gebildet ist.

5. Gurtaufroller nach Anspruch 3 und 4, **dadurch gekennzeichnet, dass** das aufwickelbare Element mit seinem einen Ende (130) mit der Gurtspindel und mit seinem anderen Ende (140) mit der Sperrbasis (80) verbunden ist.

6. Gurtaufroller nach Anspruch 5, **dadurch gekennzeichnet, dass** das aufwickelbare Element derart angeordnet ist, dass es im Falle eines Gurtbandauszugs bei gesperrter Sperrbasis auf einer Aufwickelvorrichtung aufgewickelt wird.

7. Gurtaufroller nach Anspruch 6, **dadurch gekennzeichnet, dass** die Aufwickelvorrichtung durch einen ringförmigen Aufnahmekanal (120) gebildet ist, der konzentrisch zu einem zylinderförmigen Hohlraum (150) der Gurtspindel (20) angeordnet ist.

8. Gurtaufroller nach Anspruch 7, **dadurch gekennzeichnet, dass** zwischen dem ringförmigen Aufnahmekanal (120) und dem zylinderförmigen Hohlraum (150) ein schmaler im Querschnitt ringförmiger Trennbereich (160) angeordnet ist.

9. Gurtaufroller nach Anspruch 7 oder 8, **dadurch gekennzeichnet, dass** in dem zylinderförmigen Hohlraum (150) der Torsionsstab (40) angeordnet ist.

10. Gurtaufroller nach Anspruch 6, **dadurch gekennzeichnet, dass** die Aufwickelvorrichtung durch den Torsionsstab (40) gebildet ist.

11. Gurtaufroller nach Anspruch 6, **dadurch gekennzeichnet, dass** die Aufwickelvorrichtung durch die Sperrbasis (80) gebildet ist.

12. Gurtaufroller nach einem der voranstehenden Ansprüche 6 bis 11, **dadurch gekennzeichnet, dass** die Länge des aufwickelbaren Elements derart bemessen ist, dass es nach Erreichen der vorgegebenen Gurtbandauszugslänge vollständig auf der Aufwickelvorrichtung aufgewickelt ist und die Gurtrückhaltekraft erhöht.

13. Gurtaufroller nach Anspruch 12, **dadurch gekennzeichnet, dass** das aufwickelbare Element im Grundzustand des Gurtaufrollers, also vor Unfalleintritt, auf der Aufwickelvorrichtung bereits zumindest teilweise aufgewickelt ist.

14. Gurtaufroller nach Anspruch 13, **dadurch gekennzeichnet, dass** das aufwickelbare Element im Grundzustand des Gurtaufrollers auf der Aufwickelvorrichtung derart aufgewickelt ist, das es im Falle eines Gurtbandauszugs bei gesperrter Sperrbasis zunächst von der Aufwickelvorrichtung abgewickelt wird und erst nach einem vollständigen Abwickeln wieder auf der Aufwickelvorrichtung aufgewickelt wird, und zwar mit entgegengesetzter Wickelrichtung.

15. Gurtaufroller nach einem der voranstehenden Ansprüche, **dadurch gekennzeichnet, dass** das aufwickelbare Element zumindest eine Sollbruchstelle (200) aufweist, die bei Überschreiten der vorgegebenen maximalen Gurtrückhaltekraft (Fmax) aufbricht.

16. Gurtaufroller nach einem der voranstehenden Ansprüche, **dadurch gekennzeichnet, dass** die vorgegebene maximale Gurtrückhaltekraft (Fmax) größer ist als die Gurtrückhaltekraft (Ft), auf die die Gurtkraftbegrenzungseinrichtung (40) die Gurtrückhaltekraft bei Erreichen der vorgegebenen Gurtbandauszugslänge (Sg) begrenzt.

17. Gurtaufroller nach einem der voranstehenden Ansprüche, **dadurch gekennzeichnet, dass** die maximale Gurtrückhaltekraft der Gurtkrafterhöhungseinrichtung größer ist als 6672 N.

18. Gurtaufroller nach einem der voranstehenden Ansprüche, **dadurch gekennzeichnet, dass** die vorgegebene Gurtbandauszugslänge kleiner ist als 508 mm.

19. Gurtaufroller nach einem der voranstehenden Ansprüche, **dadurch gekennzeichnet, dass** die Gurtkrafterhöhungseinrichtung (100) derart ausgestaltet ist, dass sie vor Erreichen der vorgegebenen Gurtbandauszugslänge den Gurtbandauszug unbeeinflusst, zumindest annähernd unbeeinflusst lässt, so dass das Gurtkraft-Begrenzungsverhalten des Gurtaufrollers völlig oder zumindest überwiegend durch die Gurtkraftbegrenzungseinrichtung (40) bestimmt wird.
